(19) Europäisches Patentamt / European Patent Office / Office européen des brevets

(11) **EP 2 416 398 A1**

(12) **EUROPEAN PATENT APPLICATION**
published in accordance with Art. 153(4) EPC

(43) Date of publication:
**08.02.2012 Bulletin 2012/06**

(51) Int Cl.:
*H01M 2/02* (2006.01)          *H01M 2/34* (2006.01)

(21) Application number: **09842625.7**

(22) Date of filing: **31.03.2009**

(86) International application number:
**PCT/JP2009/056681**

(87) International publication number:
**WO 2010/113271 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Mitsubishi Heavy Industries, Ltd. Tokyo 108-8215 (JP)**

(72) Inventor: **KOGURE, Masanori Tokyo 108-8215 (JP)**

(74) Representative: **Henkel, Breuer & Partner Patentanwälte Maximiliansplatz 21 80333 München (DE)**

(54) **RECHARGEABLE BATTERY AND BATTERY SYSTEM**

(57)     A secondary battery 101 in accordance with the present invention includes a secondary battery 101 including a square battery can 1 including a positive electrode terminal 8 and a negative electrode terminal 9, an electrode assembly G disposed in the square battery can 1, and formed of a sheet-shaped positive electrode 2 electrically connected to the positive electrode terminal 8 and a sheet-shaped negative electrode 3 electrically connected to the negative electrode terminal 9 to be laminated with a separator interposed therebetween, and first and second auxiliary insulating sheets 4 which are respectively disposed at opposite positions on long sides of a surface of the square battery can 1 on which the positive electrode terminal 8 and the negative electrode terminal 9 are formed to sandwich the electrode assembly G. The secondary battery is **characterized by** first and second retainers 5 having substantially the same width as an internal length of the square battery can 1 in a direction of the short side of the surface, and disposed at opposite positions on the short sides so as to sandwich the electrode assembly G, the first and second retainers 5 being in contact with the square battery can 1 at a plurality of points to support the electrode assembly G.

FIG. 1

## Description

[Field of the Invention]

The present invention relates to a secondary battery in which a positive electrode and a negative electrode are stacked or laminated with a separator interposed therebetween, and a power feeding and storage system using the battery.

[Background Art]

As is well known, among secondary batteries, which are rechargeable, in particular, lithium ion secondary batteries are widely used as power sources for home appliances because they have a high capacity with a high energy density. In addition, in recent times, the lithium ion secondary batteries have been attracting attention as power sources for electric vehicles, power sources for houses, and storage batteries for storing residual power of power plants, or the like.
The lithium ion secondary batteries may be classified into a wound-type lithium ion secondary battery, which may be called as a cylindrical-type lithium ion secondary battery and in which a pair of sheet-shaped positive and negative electrodes having a strip shape are stacked or laminated with a separator interposed therebetween in a spiral shape, and a stack-type lithium ion secondary battery in which a plurality of sheet-shaped positive electrodes and negative electrodes are stacked or laminated with a plurality of separators interposed therebetween.
In the stack-type lithium ion secondary battery, an electrode assembly constituted by the plurality of sheet-shaped positive electrodes and negative electrodes, is generally housed in a square battery can, which may be called as a prismatic can, having a substantially rectangular cross-section. Meanwhile, in the wound-type lithium ion secondary battery, an electrode assembly, constituted by the pair of the sheet-shaped positive electrode and the sheet-shaped negative electrode, may be housed in a cylindrical battery can having a substantially cylindrical cross-section, or may be housed in the square battery can.

However, for the stack-type or wound-type lithium ion battery, when the square battery can is used, since the sheet-shaped positive electrode and negative electrode are stacked or laminated with the separator interposed therebetween, the positive electrode and the negative electrode may be displaced in the square battery can, i.e., "a misaligned stack" may occur. When such a misaligned stack occurs, the positive electrode and the negative electrode contact each other, increasing the probability of failures such as a short circuit or the like, occurring in the battery. In addition, since the square battery can is formed of a conductive material, insulation from the positive electrode and the negative electrode is needed.
Accordingly, when the electrode assembly of the stack-type lithium ion secondary battery is housed in the square battery can, a technique of forming an auxiliary insulating sheets on the surface of sheet-shaped electrodes (e.g., the sheet-shaped positive electrode or the sheet-shaped negative electrode), arranged at the farthest end of the electrode assembly and fixing it to the electrode assembly by using tape has been proposed (see Patent Document 1).

[Patent Document 1] Japanese Unexamined Patent Application Publication No. 2008-91099

[Disclosure of the Invention]

[Problems to be solved by the Invention]

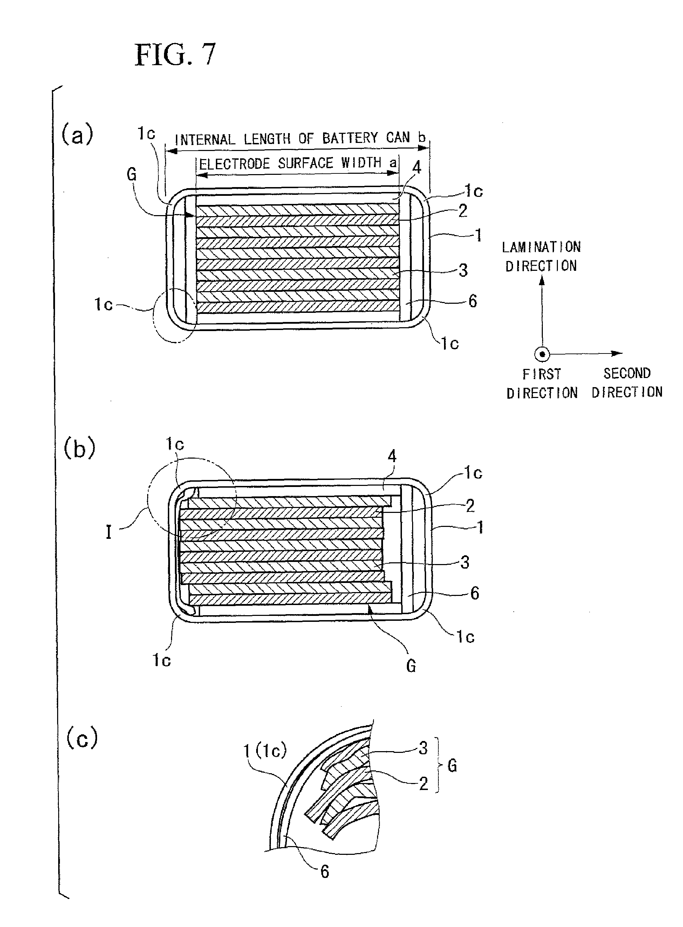

According to the proposal, it is said that it is possible to prevent the occurrence of the misaligned stack by fixing the auxiliary sheets with the electrode assembly by using tape, in addition to insulate the electrode assembly against the square battery can to a direction of the stack of the electrodes, which is called as "Lamination direction". However, it is found that the misaligned stack cannot be sufficiently prevented according to the proposal, and thus, it is difficult to sufficiently provide designed performance. This will be described below with reference to FIGS. 7(a), 7(b) and 7(c).

FIG. 7(a) shows a cross-section intersecting a direction perpendicular to a surface (a first direction), in which a positive electrode terminal and a negative electrode terminal (not shown) are formed, among surfaces of a square battery can 1. An electrode assembly "G", in which sheet-shaped positive electrodes 2 and negative electrodes 3 are stacked or laminated with separators (not shown) interposed between them, is inserted into the square battery can 1. In order to insulate the electrode assembly G from the square battery can 1 formed of a conductive material, as shown in the drawings, auxiliary insulating sheets 4 are arranged at the long sides among four sides of the electrode assembly, which is corresponding to the long sides of the surface in which the positive electrode terminal and the negative electrode terminal are formed, and auxiliary insulating sheets 6 are arranged at the short sides among four sides of the electrode assembly, which is corresponding to the short sides of the surface. In FIG7 (a), when an electrode surface width "a" is equal to an internal length "b" of the battery can which is along the long sides, since corners 1c of the square battery can are rounded, the electrodes adjacent to the corners 1c are pressed and deformed to break the separators. Therefore, failures such as a short circuit might happen. In order to avoid deformation of the sheet-shaped electrodes, the electrode surface width "a" is designed to have a length slightly smaller than the internal length "b" and not affected by the rounding of the corners 1c of the battery can.
In addition, since an electrolyte should be stored in the square battery can 1, a predetermined space must be provided between the electrode assembly G and the square battery can 1. For this reason, the auxiliary insulating sheet 6 is made of an insulating material and as thin as possible ensuring insulating properties, i.e., an extremely thin without elasticity.

However, in this configuration, for example, when the battery is used as a power source for an electric vehicle and continuous vibrations are applied to the square battery can 1, the tape may become loosened under an environment in which the electrode assembly G is immersed in the electrolyte, even though the electrode assembly G is fixed by the tape. As a result, the auxiliary insulating sheet 5 is deformed by the weight of the electrode assembly G along the shape of the square battery can 1, and a misaligned stack between the positive electrodes 2 and the negative electrodes 3 occurs as shown in FIG. 7(b). When the misaligned stack occurs, as shown in FIG. 7(c) in which the corner 1c of the square battery can 1 is enlarged, the positive electrode 2 and the negative electrode 3 corresponding to an end of the electrode assembly G are deformed along the square battery can 1. When vibrations are further applied in addition to the deformed state, it is found that the separator might be broken to cause failures such as a short circuit. Meanwhile, since the electrode disposed at the center of the electrode assembly G is in simple contact with an inner wall of the square battery can 1 in a direction perpendicular to the inner wall even when the misaligned stack occurs, deformation of the electrode such as distortion cannot easily occur, and the probability of causing a failure is also very low.

In consideration of the above problems, it is an object of the present invention to provide a secondary battery and a power feeding or storage system using the battery that are capable of preventing deformation of electrodes at corners of a square battery can, and maximally showing design performance of the battery, even when continuous vibrations are applied to the battery.

[Means for Solving the Problems]

In order to solve the problems, a secondary battery of the present invention includes the following elements.

That is, the secondary battery includes a square battery can including a positive electrode terminal and a negative electrode terminal, a electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween, first and second auxiliary insulating sheets arranged to sandwich the electrode assembly therebetween from sides of the electrode assembly corresponding to long sides of a surface of the square battery can on which the positive electrode terminal and the negative electrode terminal are formed, and first and second retainers in contact with the square battery can at a plurality of points of the first and the second retainers to support the electrode assembly, having substantially the same width as an internal length of the square battery can in a direction of the short sides of the surface, and arranged to sandwich the electrode assembly from sides of the electrode assembly corresponding to the short sides.

In addition, an electric vehicle as a power feeding system in accordance with the present invention includes: a secondary battery including a square battery can including a positive electrode terminal and a negative electrode terminal, a electrode assembly arranded in the square battery can, in which a sheet-shaped positive electrode electrically connected to the positive electrode terminal and a sheet-shaped negative electrode electrically connected to the negative electrode terminal are stacked with a separator interposed therebetween, first and second auxiliary insulating sheets arranged to sandwich the electrode assembly therebetween from sides of the electrode assembly corresponding to long sides of a surface of the square battery can on which the positive electrode terminal and the negative electrode terminal are formed; and first and second retainers in contact with the square battery can at a plurality of points of the first and the second retainers to support the electrode assembly, having substantially the same width as an internal length of the square battery can in a direction of the short sides of the surface, and arranged to sandwich the electrode assembly from sides of the electrode assembly corresponding to the short sides; and a motor for driving wheels, wherein the motor is driven by receiving power from the secondary battery.

The electric vehicle may be a vehicle that can be driven by electricity. Therefore, the electric vehicle includes a hybrid vehicle.

Further, a power storage system in accordance with the present invention includes: a secondary battery including a square battery can including a positive electrode terminal and a negative electrode terminal, a electrode assembly arranged in the square battery can, in which a sheet-shaped positive electrode electrically connected to the positive electrode terminal and a sheet-shaped negative electrode electrically connected to the negative electrode terminal are stacked with a separator interposed therebetween, first and second auxiliary insulating sheets arranged to sandwich the electrode assembly therebetween from sides of the electrode assembly corresponding to long sides of a surface of the square battery can on which the positive electrode terminal and the negative electrode terminal are formed; and first and second retainers in contact with the square battery can at a plurality of points of the first and the second retainers to support the electrode assembly, having substantially the same width as an internal length of the square battery can in a direction of the short sides of the surface, and arranged to sandwich the electrode assembly from sides of the electrode assembly corresponding to the short sides; and power generation equipment, wherein the secondary battery receives power from the power generation equipment to store the power.

The power generation equipment may be any equipment for generating power such as a solar cell, a fuel cell, a windmill, thermal power generation equipment, hydroelectric power generation equipment, nuclear power generation equipment, or a simple power generator installed at a vehicle, a bicycle, or the like. The power generation equipment is not limited to a power plant and it may be a power generator installed in a house.

Since ends of the sheet-shaped electrodes are weak to physical impacts to be easily bent, the ends of the electrode assembly must be carefully inserted into the square battery can not to be bumped against the square battery can. However, because of a function of an insertion guide of the retainer when both the retainers and the electrode assembly are inserted into the square battery can, the electrode assembly can be easily inserted into the square battery can without damage to the electrode assembly. For this reason, it is possible to rapidly and easily manufacture the secondary battery.

The retainer may be formed of a plastic material having insulation properties and formability Since it is necessary to provide a space to sufficiently store an electrolyte between the square battery can 1 and the retainer, the retainer may have a structure in which the electrodes of the electrode assembly are supported by the surface part to prevent the electrodes from entering the rounded parts of corners of the square battery can 1, and the support part in contact with the square battery can to support the surface part is in point contact therewith.

In addition, in order to sufficiently infiltrate the electrolyte into the electrode assembly, the retainer may have a function of infiltrating the electrolyte into the retainer itself. The retainer may have through-holes to provide the infiltration function.

The support part may be formed by folding and bending the ends of the insulating sheet with elasticity, or may be formed in a shape having the surface part and the plurality of support parts.

The support part may have a hemispherical shape. A plurality of hemispherical parts may be formed by a hot press forming method of hot-pressing a sheet-shaped plastic material with elasticity onto a die having a plurality of convex parts. In addition, the plurality of hemispherical parts may be formed by a vacuum forming method.

Since the auxiliary insulating sheet is provided to electrically insulate the electrode assembly from the square battery can, the elasticity may be omitted.

The secondary batteries may be connected in series or in parallel to constitute a set of batteries.

[Effects of the Invention]

In accordance with the present invention, even when continuous vibrations are applied to a square battery can, or even when charges/discharges are repeated to expand electrodes so that tape for fixing a electrode assembly is loosened, it is possible to prevent deformation of electrodes corresponding to ends of the electrode assembly along rounded corners of the square battery can. As a result, it is possible to provide a secondary battery and a power feeding and storage system using the battery that are capable of reducing probability of failures and showing designed performance. Therefore, the effect can be obtained by either of a stack- type or a wound-type secondary battery, for example, either of the stack-type lithium ion secondary battery or the wound-type lithium ion secondary battery.

[Brief Description of the Drawings]

FIG. 1 shows a schematic structure of a stack-type secondary battery 101 in accordance with a first embodiment of the present invention. FIG. 1(a) shows a cross-sectional view of a square battery can and FIG. 1(b) shows a perspective view of an internal structure.

FIG. 2 is a schematic cross-sectional view of a stack-type secondary battery 102 in accordance with a second embodiment of the present invention.

FIG. 3 is a schematic cross-sectional view of a stack-type secondary battery 103 in accordance with a third embodiment of the present invention.

FIG. 4 is a schematic view of a retainer 13 of a stack-type secondary battery 104 in accordance with a fourth embodiment of the present invention. FIG. 4 (a) shows a plan view and FIG. 4(b) shows a cross-sectional view taken along line II-II.

FIG. 5 is a schematic plan view of a retainer 15 of a stack-type secondary battery 105 in accordance with a fifth embodiment of the present invention.

FIG.6 is a schematic view of a power feeding and storage system using a secondary battery in accordance with a sixth embodiment of the present invention.

FIG. 7 is a schematic view of a conventional stack-type secondary battery. FIG. 7(a) shows a cross-sectional view in a normal state, FIG. 7(b) shows a cross-sectional view upon a misaligned stack, and FIG. 7(c) shows an enlarged cross-sectional view of a major portion I of FIG. 7(b).

[Description of Reference Numerals]

1: Square battery can
1a: Can wall
1b: Flat can wall
1c: Corner
2: Sheet-shaped positive electrode
3: Sheet-shaped negative electrode

4: Auxiliary insulating sheet
5, 10, 11, 13, 15: Retainer
5a: Support surface part
5b, 10b: Support leg
7: Gap
8: Positive electrode terminal
9: Negative electrode terminal
12: Auxiliary support leg
14: Hemispherical part
101,102, 103,104, 105: Stack-type secondary battery
115: House
116: Switchboard
117: Preliminary secondary battery
118: Control box
119: Power distribution system
120: Power generation equipment
121: Electric vehicle
122: Secondary battery
G: Electrode assembly

[Best Mode for Carrying out the Invention]

Hereinafter, a secondary battery in accordance with an embodiment of the present invention will be described with reference to the accompanying drawings. The present invention is not limited to the following embodiments, but may be variously modified without departing from the scope of the invention.

(First Embodiment)

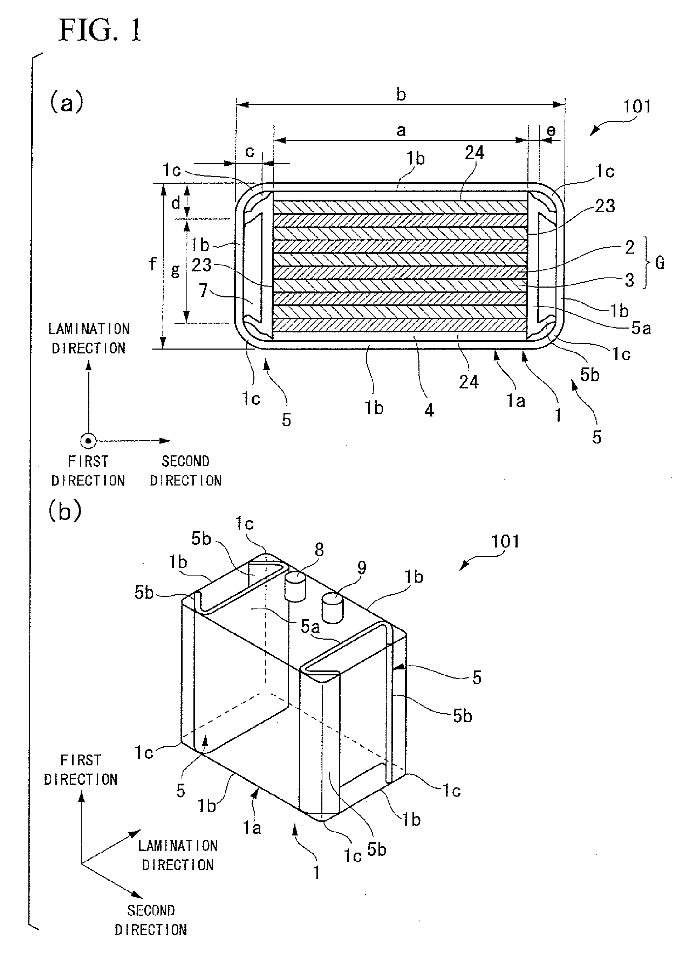

FIGS. 1(a) and 1(b) are a cross-sectional view of a stack-type secondary battery 101 and a perspective view of an inner structure of a battery can in accordance with a first embodiment of the present invention, respectively, in a direction perpendicular to a surface (hereinafter, referred to as a first direction) of a square battery can 1, on which a positive electrode terminal 8 and a negative electrode terminal 9 are formed, In addition, FIG. 1(b) shows positions of the positive electrode terminal 8 and the negative electrode terminal 9.
As shown in FIG. 1(a), the stack-type secondary battery 101 schematically includes the square battery can 1, a electrode assembly G, first auxiliary insulating sheets (first auxiliary insulating members) 4 and retainers 5, which are disposed between the battery can 1 and the electrode assembly G, and an electrolyte (not shown).
As shown in FIG. 1(b), the battery can 1 has a can wall 1a formed in a square shape like a box-shaped body, and the electrode terminals 8 and 9 are installed at the can wall 1 a formed at one side in the first direction.
As shown in FIG. 1(a), the battery can 1 has four flat can walls 1b extended to the first direction from the surface of the battery can 1, and two of each flat can walls 1b adjacent to each other are connected through corners 1c having a radius of curvature.
The square battery can 1, made of aluminum or the like, contains a electrode assembly "G" in which rectangular sheet-shaped positive electrodes 2 electrically connected to the positive electrode terminal 8 and rectangular sheet-shaped negative electrodes 3 electrically connected to the negative electrode terminal 9 are stacked or laminated with separators (not shown) interposed therebetween.
Therefore, the two auxiliary insulating sheets 4 disposed to sandwich the electrode assembly G from a direction of the long side of the surface (hereinafter, the direction is referred to as a second direction), on which the electrode terminals 8 and 9 of the square battery can 1 are formed, and the two retainers 5 arranged to sandwich the electrode assembly G from a direction of the short side of the surface (hereinafter, the direction is referred to as a lamination direction), are inserted.
In other words, two lamination end surfaces 23 formed by the sheet-shaped positive electrodes 2 and the sheet-shaped negative electrodes 3, which are alternately disposed, are interposed between the two retainers 5 in the second direction. These two lamination end surfaces 23 are opposite to the flat can walls 1b with gaps 7 interposed therebetween in the second direction. In addition, the electrolyte (not shown) may be stored in the gaps 7.
The retainers 5 have surface parts (support surface parts 5a) in contact with ends of the respective sheet-shaped electrodes of the electrode assembly Q i.e., the lamination end surfaces 23, to support them. In addition, each of the retainers 5 has two support parts (support legs 5b) in point contact with the square battery can 1. The support legs 5b extend from both ends of the support surface part 5a to the flat can wall 1b in the lamination direction to be in contact with the flat can wall 1b.
The retainer 5 is formed by folding and bending both ends of one insulating sheet with elasticity to form the support parts substantially having a "<" shape in combination with the surface part. Of course, two support parts substantially having a "<" shape may be integrally formed as one body with the surface part by molding to support the surface part. In consideration of insulation properties and formability, the retainer 5 may be formed of a plastic resin.
A length of the support surface part 5a of the retainer 5 in the lamination direction may be substantially the same as an internal length of the square battery can in the lamination direction.
Provided that an electrode surface width of the cross-section in the direction of the long side (the second direction) is "a", the internal length of the square battery can in the direction of the long side is "b", and a thickness of the support surface part 5a of the retainer 5 is "e", a shortest distance "c" from a position of the support part in contact with the square battery can 1 to the support surface part 5a is designed as follows.

$$c \approx (b - 2e - a) \div 2$$

In order to maximally increase an electric capacity, the electrode surface width "a" is designed to have substantially the same width as a flat surface (the flat can wall 1b), except for the rounded corners (comer parts 1c) in the direction of the long side of the square battery can 1. In addition, the thickness "e" of the support surface part 5a is designed to have elasticity sufficient to support the respective electrodes of the electrode assembly G. The support surface part 5a may have a plate shape with a thickness such that the surface part 5a cannot be easily bent or curved.

Further, a gap 7 defined by the lamination end surface 23 of the electrode assembly G and the square battery can 1 with the retainers 5 interposed therebetween requires a width sufficient to store an electrolyte. Since a larger amount of the electrolyte can be stored as the volume of the support legs 5b substantially having the "<" shape is reduced, it is preferable for distance "d" in the direction of the short side (the lamination direction) from the end of the square battery can 1 to the position of the support leg 5b substantially having the "<" shape in contact with the square battery can 1 to be shorter. Therefore, provided that an internal length in the direction of the short side is "f', and a width of the flat surface except for the rounded corners 1c in the direction of the short side of the square battery can 1 is "g", the distance "d'' may be designed as follows.

$$(f-g) \div 2 \approx d$$

According to the configuration, the support surface parts 5a of the retainer 5 for sandwiching the electrode assembly G therebetween support the electrode assembly G and the substantial "<" shape of the support legs 5b supports the support surface parts 5a to prevent the sheet-shaped electrodes 2 and 3 corresponding to the end of the electrode assembly G from entering the rounded corners of the square battery can 1, even when vibration occurs, for preventing failures of the battery.
In addition, since the retainers 5 function as an insertion guide when the electrode assembly G is inserted into the square battery can 1, the electrode assembly G can be rapidly and safely inserted into the square battery can 1. Therefore, it is possible to improve a manufacturing speed.
The auxiliary insulating sheet 4 may be formed of a material with no elasticity, for example, an insulating plastic film, because the sheet is provided to electrically insulate the square battery can 1 and the electrode assembly G from each other.
The retainer 5 needs to be formed of a material and to have a thickness with elasticity. The retainer 5 may be formed of a material that cannot be easily bent or curved.
While in the first embodiment, the case where the electrode assembly of the stack-type secondary battery is housed in the square battery can was described, even when an electrode assembly of a wound-type secondary battery is housed in the square battery can, the same effect can be obtained. The secondary battery may be, for example, a lithium ion secondary battery.

(Second Embodiment)

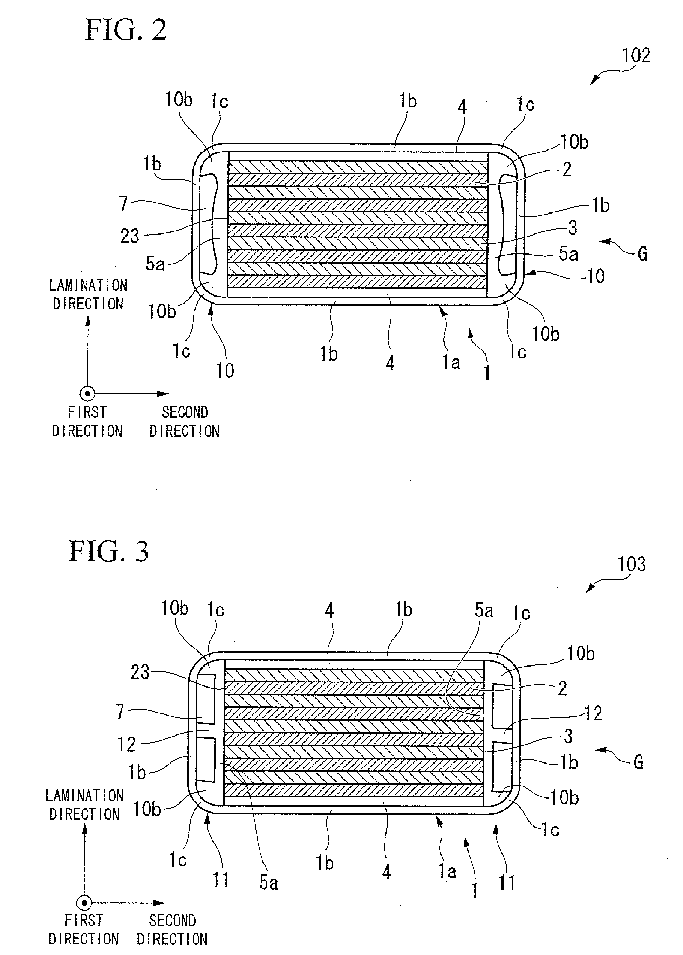

A stack-type secondary battery 102 in accordance with a second embodiment of the present invention will be described with reference to FIG. 2. The present invention is not limited to the following embodiment, but may be variously modified without departing from the scope of the invention. In addition, the same elements in FIG. 2 as in FIG. 1 are designated by the same reference numerals in FIG. 1, and detailed descriptions thereof will not be repeated.
In FIG. 2, the stack-type secondary battery 102 has retainers 10 different from the retainers 5 of FIG. 1. Each of the retainers 10 has a support surface part 5a for supporting the sheet-shaped electrodes of the electrode assembly G interposed therebetween, and two support legs 10b integrally formed as one body with the support surface part 5a and fitted into the rounded parts (interior angles) of the corners 1c of the square battery can 1 to be in contact with the square battery can 1. Except for this, the second embodiment is similar to the first embodiment.
In this configuration, the retainer 10 has the two support legs 10b which conform to the rounded parts of the corners 1c of the square battery can 1 and are in contact with the square battery can 1. The two support legs 10b support the support surface part 5a at two points, respectively, unlike the retainer 5 of FIG. 1. Therefore, it is possible to more securely prevent the sheet-shaped electrodes 2 and 3 of the electrode assembly G from entering the rounded parts of the corners 1c of the square battery can 1.

(Third Embodiment)

A stack-type secondary battery 103 in accordance with a third embodiment of the present invention will be described with reference to FIG. 3. The present invention is not limited to the following embodiment, but may be variously modified without departing from the scope of the invention. In addition, the same elements in FIG. 3 as in FIGS. 1 and 2 are designated by the same reference numerals in FIGS. 1 and 2, and detailed descriptions thereof will not be repeated.
In FIG. 3, the stack-type secondary battery 103 includes a retainer 11 further having an auxiliary support leg 12 disposed between the two support legs 10b of the retainers 10 of FIG. 2, and extending from the support surface part 5a to the flat can wall 1b to have a plate shape in contact with the flat can wall 1b. Except for this, the third embodiment is similar to the embodiments of FIGS. 1 and 2.
In this configuration, by the auxiliary support leg 12 having a plate shape, it is possible to more securely support the support surface part 5a of the retainer 11 which supports the electrode assembly G than the second embodiment.

While FIG. 3 shows only one auxiliary support leg 12 having a plate shape disposed at a substantially center position of the square battery can 1 in the direction of the short side, under the condition that the electrolyte can be sufficiently stored, a plurality of auxiliary support legs 12 having a plate shape may be provided to more securely support the support surface part 5a of the retainer 11.

(Fourth Embodiment)

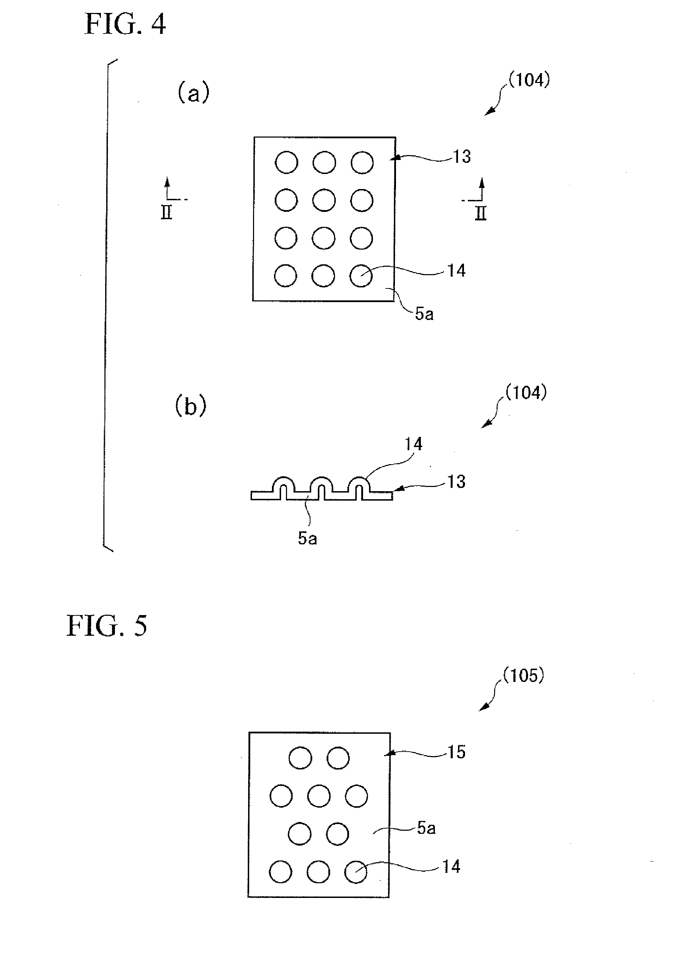

A stack-type secondary battery 104 in accordance with a fourth embodiment of the present invention will be described with reference to FIGS. 4(a) and 4(b). The present invention is not limited to the following embodiment, but may be variously modified without departing from the scope of the invention. In addition, the same elements in FIGS. 4(a) and 4(b) as in FIGS. 1, 2 and 3 are designated by the same reference numerals in FIGS. 1, 2 and 3, and detailed descriptions thereof will not be repeated.

FIG. 4(a) is a plan view of a retainer 13 disposed in the square battery can 1, similar to the retainer 5, 10 or 11. FIG. 4(b) is a cross-sectional view of the retainer 13 when the retainer 13 is cut along an apex of a hemispherical part 14 in a direction parallel to a surface of the square battery can on which electrode terminals are formed, i.e., a cross-sectional view taken along line II-II of FIG. 4(a).

An upper part of the retainer 13 in FIG. 4(a) is arranged to the surface of the square battery can 1 on which the electrode terminals 8 and 9 are formed, and a lower part of the retainer 13 in FIG. 4(a) is arranged to a bottom surface of the square battery can 1.

The retainer 13 includes a plurality of hemispherical parts 14. The hemispherical parts 14 have function as support legs in contact with the square battery can 1. Except for this, the fourth embodiment is similar to the first embodiment.

The plurality of hemispherical parts 14 are formed by a method of heating a mold having a plurality of convex parts and pressing the heated mold against a sheet-shaped plastic material with elasticity, i.e., a hot press forming method. A vacuum forming method may also be used to form the hemispherical parts 14.

Unlike the first to third embodiments, in forming the retainer 13 having this configuration, a complex process like the process of bending an insulating sheet to form the retainer 5 or the process of molding plastic into shapes of the retainers 10 and 11, is not required. The retainer 13 can be formed by merely pressing a mold against one surface of a sheet-shaped plastic material. Therefore, the manufacturing process can be simplified to reduce manufacturing cost.

(Fifth Embodiment)

A stack-type secondary battery 105 in accordance with a fifth embodiment of the present invention will be described with reference to FIG. 5. The present invention is not limited to the following embodiment, but may be variously modified without departing from the scope of the invention. In addition, the same elements in FIG 5 as in FIGS. 1, 2, 3 and 4 are designated by the same reference numerals in FIGS. 1, 2, 3 and 4, and detailed descriptions thereof will not be repeated.

FIG. 5 is a plan view of a retainer 15 arranged in the square battery can 1, similar to the retainers 5, 10, 11 and 13. In FIG. 5, an upper part of the retainer 15 in FIG. 5 is arranged to the surface of the square battery can 1 on which the electrode terminals are formed, and a lower part of the retainer 15 in FIG. 5 is arranged to a bottom surface of the square battery can 1.

The retainer 15 is distinguished from the retainer 13 in that a plurality of hemispherical parts 14 are disposed in a zigzag pattern. Except for this, the fifth embodiment is similar to the fourth embodiment.

While the sheet-shaped electrodes 2 and 3 are in contact with the support surface part 5a and supported by the retainer 15 in a vertical direction of FIG. 5, the hemispherical parts 14 are disposed in a zigzag pattern such that the number of the hemispherical parts 14 is constant in the vertical direction. While the hemispherical parts 14 are formed to provide recesses in the support surface part 5a of the retainer 15 for supporting the electrode assembly G, areas of the sheet-shaped electrodes in contact with the surface part except for the recess parts are substantially equal to each other such that a difference in pressure between the sheet-shaped electrodes and the retainer 15 can be substantially uniformly attenuated. Therefore, it is possible to reduce probability of failures in the fifth embodiment in comparison with the fourth embodiment.

(Sixth Embodiment)

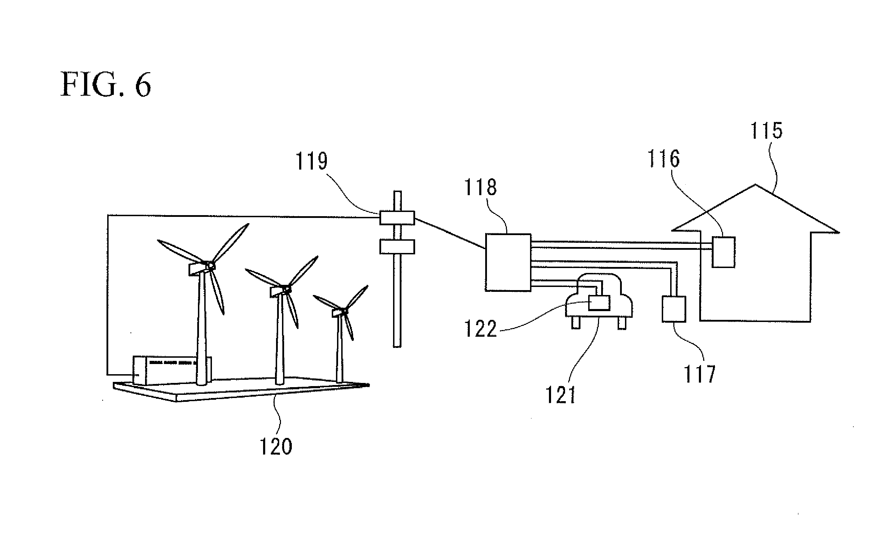

A power storage and feeding system using a secondary battery in accordance with a sixth embodiment of the present invention will be described with reference to FIG. 6. The present invention is not limited to the following embodiment, but may be variously modified without departing from the scope of the invention.

A secondary battery 122 installed in an electric vehicle 121 and a preliminary secondary battery 117 set outside a house 115 are secondary batteries in accordance with the present invention described in the first to the fifth embodiments.

First, a power storage system will be described. Power generated from power generation equipment 120 such as wind power generation, thermal power generation, hydroelectric power generation, nuclear power generation, a solar cell, a fuel cell, is supplied to a control box 118 used by a user via a power distribution system 119. When the user operates the control box 118, the electric power transmitted from the power generation equipment 120 is supplied to any one of the secondary battery 122 as a drive power source of the electric vehicle 121, the preliminary secondary battery 117, and a switchboard 116. The preliminary secondary battery 117 or the secondary battery 122 of the electric vehicle 121 performs power charge/storage when the power is supplied. In order to use the battery as a preliminary power source when the power feeding from the power generation equipment 120 is stopped due to a disaster or the like, it is preferable to sufficiently store power in the preliminary secondary battery 117.

The control box may be program-controlled such that the power is supplied to the switchboard 116 by day and to the preliminary secondary battery 117 or the secondary battery 122 of the electric vehicle 121 by night.

Hereinafter, a power feeding system will be described. The preliminary secondary battery 117 charged by the power storage system is electrically connected to the switchboard 116 in the house 115 via the control box 118. The switchboard 116 is electrically connected to home appliances such as an air conditioner, a television, which are connected to plugs in the house 115. The user can select to drive the home appliances in the house 115 using power received from the power distribution system 119 or using power of the preliminary secondary battery 117 stored by the power storage system through the control box 118.

By means of a switching operation of the control box 118, when the preliminary secondary battery 117 is electrically connected to the switchboard 116, the electric power can be fed from the preliminary secondary battery 117 to the switchboard 116 to drive the home appliances.

The electric vehicle 121 can run by feeding power to a wheel driving motor from the secondary battery 122 charged by the power storage system. The electric vehicle 21 may be a vehicle having wheels that can be driven by an electric motor or a hybrid vehicle.

Since the power storage and feeding system using the secondary battery in accordance with the present invention can securely prevent the misaligned stack and electrode curves from occurring in the corners of the square battery can due to vibrations, one cause of failures of the secondary battery, even when the system is used in a vehicle to which a large amount of vibrations are applied as the power feeding system and in a country in which earthquakes frequently occur as the power feeding and storage system, it is possible to stably operate without trouble.

## Claims

1.    A secondary battery comprising:

a square battery can including a positive electrode terminal and a negative electrode terminal;

an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
first and second auxiliary insulating sheets arranged to sandwich the electrode assembly between them from sides of the electrode assembly corresponding to long sides of a surface of the square battery can on which the positive electrode terminal and the negative electrode terminal are formed; and
first and second retainers in contact with the square battery can at a plurality of points of the first and the second retainers to support the electrode assembly, having substantially the same width as an internal length of the square battery can in a direction of short sides of the surface, and arranged to sandwich the electrode assembly from sides of the electrode assembly corresponding to the short sides.

2.    The secondary battery according to claim 1, wherein parts of the first and second retainers in contact with the plurality of points have hemispherical shapes, respectively.

3.    The secondary battery according to claim 2, wherein the retainers are formed of a plastic material by a hot press forming method.

4.    An electric vehicle comprising:

a secondary battery including:

a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
first and second auxiliary insulating sheets arranged to sandwich the electrode assembly between them from sides of the electrode assembly corresponding to long sides of a surface of the square battery can on which the positive electrode terminal and the negative electrode terminal are formed; and
first and second retainers in contact with the square battery can at a plurality of points of the first and the second retainers to support the electrode assembly, having substantially the same width as an internal length of the square battery can in a direction of the short sides of the surface, and arranged to sandwich the electrode assembly from sides of the electrode assembly corresponding to the short sides; and
a motor for driving wheels,
wherein the motor is driven by receiving power from the secondary battery.

5. A power storage system comprising:

a secondary battery including:

a square battery can including a positive electrode terminal and a negative electrode terminal;
an electrode assembly arranged in the square battery can, in which a sheet-shaped positive electrode electrically connected to the positive electrode terminal and a sheet-shaped negative electrode electrically connected to the negative electrode terminal are stacked with a separator interposed between them;
first and second auxiliary insulating sheets arranged to sandwich the electrode assembly between them from sides of the electrode assembly corresponding to long sides of a surface of the square battery can on which the positive electrode terminal and the negative electrode terminal are formed; and
first and second retainers in contact with the square battery can at a plurality of points of the first and the second retainers to support the electrode assembly, having substantially the same width as an internal length of the square battery can in a direction of the short side of the surface, and arranged to sandwich the electrode assembly from sides of the electrode assembly corresponding to the short sides; and
power generation equipment,
wherein the secondary battery receives power from the power generation equipment to store the power.

# FIG. 1

(a)

LAMINATION
DIRECTION

FIRST
DIRECTION

SECOND
DIRECTION

(b)

FIRST
DIRECTION

LAMINATION
DIRECTION

SECOND
DIRECTION

# FIG. 2

102

LAMINATION
DIRECTION

FIRST
DIRECTION
SECOND
DIRECTION

# FIG. 3

103

LAMINATION
DIRECTION

FIRST
DIRECTION
SECOND
DIRECTION

## FIG. 4

(a)

(104)

13

14

5a

II

II

(b)

(104)

14

13

5a

## FIG. 5

(105)

15

5a

14

FIG. 6

# FIG. 7

(a)

INTERNAL LENGTH OF BATTERY CAN b

ELECTRODE SURFACE WIDTH a

1c
G
1c
4
1c
2
1
3
6
1c

LAMINATION DIRECTION

FIRST DIRECTION    SECOND DIRECTION

(b)

1c
4
1c
2
1
3
6
1c
I
1c
G

(c)

1(1c)
3
2
G
6

## INTERNATIONAL SEARCH REPORT

International application No.

PCT/JP2009/056681

A. CLASSIFICATION OF SUBJECT MATTER
*H01M10/04*(2006.01)i, *H01M2/02*(2006.01)i, *H01M2/34*(2006.01)i, *H01M10/40* (2006.01)i

According to International Patent Classification (IPC) or to both national classification and IPC

B. FIELDS SEARCHED

Minimum documentation searched (classification system followed by classification symbols)
H01M10/04, H01M2/02, H01M2/34, H01M10/40

Documentation searched other than minimum documentation to the extent that such documents are included in the fields searched

| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-40899 A (Samsung SDI Co., Ltd.), 19 February, 2006 (19.02.06), Par. Nos. [0012] to [0061]; Fig. 1 & US 2006/0024568 A1 | 1-5 |
| A | JP 2000-150306 A (Toyota Motor Corp.), 30 May, 2000 (30.05.00), Claims; drawings (Family: none) | 1-5 |
| A | JP 8-102313 A (Sony Corp.), 16 April, 1996 (16.04.96), Claims; drawings (Family: none) | 1-5 |

[X] Further documents are listed in the continuation of Box C.   [ ] See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 22 May, 2009 (22.05.09) | Date of mailing of the international search report <br> 02 June, 2009 (02.06.09) |
|---|---|
| Name and mailing address of the ISA/ <br> Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/056681

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2006/123812 A1 (Honda Motor Co., Ltd.),<br>23 November, 2006 (23.11.06),<br>Claim 1; drawings<br>& US 2008/0003498 | 1-5 |
| A | JP 2003-282143 A (Toshiba Corp.),<br>03 October, 2003 (03.10.03),<br>Claims; drawings<br>(Family: none) | 1-5 |

Form PCT/ISA/210 (continuation of second sheet) (April 2007)

**EP 2 416 398 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008091099 A